# EUROPEAN PATENT SPECIFICATION

(11) **EP 4 432 885 B1**
(45) Date of publication and mention of the grant of the patent: **15.10.2025**
(21) Application number: 22803392.4
(22) Date of filing: 14.11.2022
(51) Int. Cl.: A47J 31/053

(54) **A HOT COFFEE BREWING APPARATUS**
VORRICHTUNG ZUM BRÜHEN VON HEISSEM KAFFEE
APPAREIL D'INFUSION DE CAFÉ CHAUD

(30) Priority: 19.11.2021 NL 2029845
(43) Date of publication of application: 25.09.2024
(73) Proprietor: Bravilor Bonamat BV, 1704 RD Heerhugowaard (NL)
(72) Inventor: DE GRAAF, Margriet, 1704 RD Heerhogwaard (NL); HAANTJES, Jelle, 1704 RD Heerhugowaard (NL); ANSING, Jan, 1704 RD Heerhugowaard (NL); DE GROOT, Gerardus Cornelis Jozef, 1704 RD Heerhugowaard (NL)
(74) Representative: van Breda, Jacobus
(86) International application number: PCT/NL2022/050650
(87) International publication number: WO 2023/091005

(56) References cited:
- WO-A1-2010/041003
- WO-A1-2013/098681
- CN-A- 102 228 364

## Description

The invention relates to a hot coffee brewing apparatus with a casing, said apparatus comprising a coffee extractor equipped to receive ground coffee beans, a heater, and a container for water used in the extraction of coffee and for receiving the extracted coffee, a circulation path having an input connecting to the container and having an output to the coffee extractor, and from which coffee extractor the extracted coffee leaving the coffee extractor will enter into the container.

WO 2010/041003 discloses a brewing apparatus with the casing comprising an extractor for receiving tea leaves, a heater, and a container for water used in the extraction of tea and for receiving the extracted tea, a circulation path having an input for receiving liquid from the container and having an output directed to the tea extractor, and from which tea extractor the extracted tea leaving the tea extractor will enter into the container, wherein the container is immovably placed in the casing and the heater is in direct heat conducting contact with the container.

US 5,868,062 discloses a hot coffee brewing apparatus comprising an extractor vessel, a combined-use decanter that retains water for extraction, receives extracted coffee liquid and is usable for pouring coffee liquid into cups. A circulation path and a circulation pump transport the liquid from the combined-use decanter and pour the liquid into the extractor vessel. A circulating water heater heats water circulated by the circulation pump. A controller controls operation in response to a tap temperature operation switch to operate the circulation pump to circulate the water for a fixed time (T1) with the circulating water heater on for a fixed time (T0) limited to an early operation period, thereby pouring high temperature water for a fixed time (T0) limited to the early operation period and subsequently pouring unheated water.

This known hot coffee brewing apparatus of US 5,868,062 has several disadvantages, one of which is that the quality of the brewed coffee is impaired by the fact that water is heated to a too high temperature immediately before being poured on the ground coffee in the coffee extractor.

A further disadvantage is that the extracted coffee which drips from the coffee extractor into the combined use decanter is not well-maintained on an ideal drinking temperature.

Still a further disadvantage is that the combined use decanter must be embodied with a valve that cooperates with a chassis on which the combined use decanter can be placed in order to open up for the circulating path and make the circulation of water from the decanter towards the extractor device possible.

It is an object of the invention to address these disadvantages and to provide a hot coffee brewing apparatus with improved coffee quality, which can be well-maintained at drinking temperature, wherein the apparatus can be provided at relatively low cost, and is less susceptible for malfunctioning or disturbances in the connection of the container with the circulation path.

These objects and other advantages that may be achieved with the invention, are embodied in the coffee brewing apparatus with the features of one or more of the appended claims.

In a first aspect of the invention the container is immovably placed in the casing with the input of the circulation path being fixed to the container, said container comprising a conduit equipped with an inlet valve and one-way valve with which fresh water can be supplied to the container, and said container comprising a tap for dispensing freshly brewed coffee from the container. In this construction wherein the input of the circulation path is fixed to the container, the need of applying closable valves to prevent that water or coffee will leave the container when it would be removed from the casing is avoided.

In a preferred embodiment the container comprises a divider plate to improve the distribution of fluid coming out of the output of the circulation path to the coffee extractor.

Preferably the heater is in direct heat conducting contact with the container. Further preferable features are than that the heater is provided in or against one of the walls of the container. Particularly suitable is that the heater is provided in or against a bottom wall of the container.

With the above mentioned features, in particular according to claim 1, it is in the first place provided that complicated circuitry and complicated design features involving valves and the like can be avoided, whereas the simplicity of the design does not stand in the way of the quality of the coffee brewed with the apparatus of the invention. On the contrary the coffee quality can be optimized by providing that the heater is arranged to heat fluid in the container to a preset brewing temperature before brewing actually commences.

It is particularly preferable that the preset brewing temperature is set below boiling temperature of the fluid in the container.

Advantageously the container is provided with a temperature sensor to monitor the temperature of the fluid in the container for controlling the heater.

A further notable feature is that the circulation path comprises a switchable pump. This switchable pump also contributes to the quality of the coffee brewed in the coffee brewing apparatus of the invention, particularly by providing that the switchable pump is arranged to be activatable manually or automatically after reaching or surpassing a preset temperature of the fluid in the container as determined with the temperature sensor.

Preferably further an operational time of the switchable pump following activation is selectable to a predetermined brewing time period.

Desirably the heater is arranged to switch to warm keeping mode after elapse of the operational time of the switchable pump.

Another notable feature that also contributes to the effective use of available energy is that the heater is incapable to heat fluid in the container to boiling temperature. This is a feature that substantially contributes to the superior quality of the coffee brewed with the apparatus of the invention.

Preferably the container is provided with a second temperature sensor in the heater's vicinity to monitor the temperature of the heater and enable that said temperature is kept below boiling temperature.

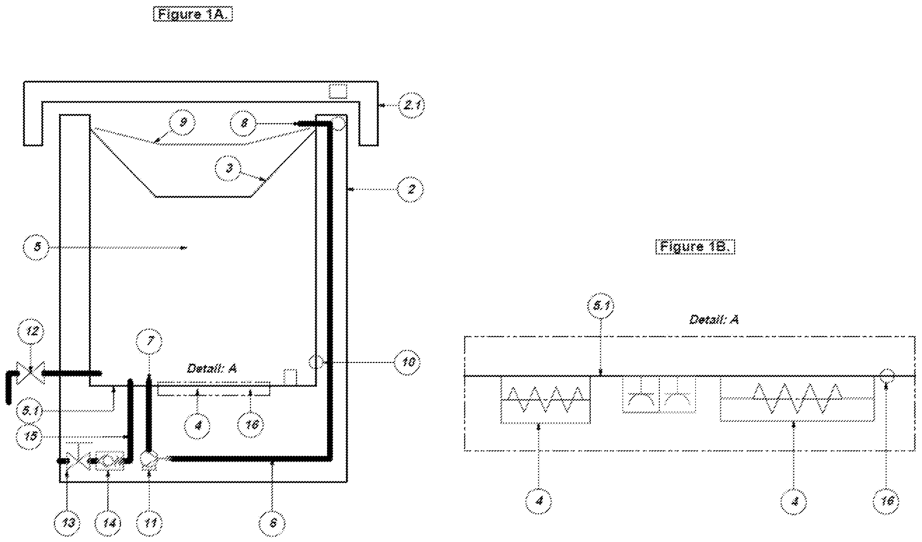

The invention will hereinafter be further elucidated with reference to a drawing of figure 1A and figure 1B of a nonlimiting schematic example of a hot coffee brewing apparatus provided with features according to the invention.

In figure 1A a hot coffee brewing apparatus 1 according to the invention is shown which is provided with a casing 2, on top of which a lid 2' is applied. The apparatus 1 comprises further a coffee extractor 3 equipped to receive ground coffee beans (not shown). The apparatus 1 further comprises a heater 4, and a container 5 for water used for the extraction of coffee and for receiving the extracted coffee. In connection therewith the apparatus 1 further comprises a circulation path 6 having an input 7 connecting to the container 5 and having an output 8 to the coffee extractor 3. The figure also shows divider plate 9 to improve the distribution of fluid coming out of the output 8 over the coffee extractor 3. The extracted coffee that leaves the coffee extractor 3 will enter back into the container 5.

As will be clear from the figure, the container 5 is immovably placed in the casing 2 and the heater 4 is in direct heat conducting contact with the container 5. The input 7 of the circulation path 6 is fixed to the container 5. In detail A shown in figure 1B a preferable embodiment is shown wherein the heater 4 is provided in or against a bottom wall 5' of the container 5, depicting that in general it is preferred that the heater 4 is provided in or against one of the walls of the container 5, the bottom wall being the most preferred option.

The heater 4 is arranged to heat fluid in the container 5 to a preset brewing temperature, wherein it is preferable that the preset brewing temperature is set below boiling temperature of the fluid in the container 5. It is remarked that preferably the heater 4 is incapable to heat the fluid in the container 5 to boiling temperature so that boiling will be avoided in all circumstances. The above-mentioned detail A of figure 1B shows that the container 5 may be provided with a temperature sensor 16 in the heater's vicinity to monitor the temperature of the heater 4 and arrange that said temperature of the heater 4 is kept below boiling temperature. This is a preferred way of arranging that the heater 4 cannot heat the fluid in the container 5 to boiling temperature, which would be detrimental for the coffee quality.

It is further to be noted as a desirable aspect of the invention that all water in the container 5 can be heated to the desired brewing temperature before the brewing actually commences. This promotes both heating efficiency and the quality of the eventually brewed coffee.

The figure also shows that the container 5 is provided with another temperature sensor 10 to monitor the temperature of the fluid in the container 5 for controlling the heater 4. The skilled person is perfectly knowledgeable how the temperature measurement with the temperature sensor 10 and with the temperature sensor 16 should be translated in control actions for the heater 4, so this is not further shown or explained with reference to the drawing.

The figure further shows that the circulation path 6 comprises a switchable pump 11. This switchable pump 11 is arranged to be activatable manually or automatically after reaching or surpassing a preset temperature of the fluid in the container 5 as determined with the temperature sensor 10. This preset temperature is desirably the abovementioned preset brewing temperature, which provides optimal brewing quality.

It is further to be noted that an operational time of the switchable pump 11 following activation is selectable to a predetermined brewing time period. After this operational time of the pump 11 has elapsed all water initially present in the container 5 is converted to high quality freshly brewed coffee in the container 5. Accordingly the heater 4 is arranged to switch then to warm keeping mode after elapse of said operational time of the switchable pump 11.

With reference 12 a tap is indicated for dispensing the freshly brewed coffee from the container.

When the container must be replenished with fresh water this can be done with inlet valve 13 and one-way valve 14 in conduit 15 with which the fresh water can be supplied to the container 5.

Although the invention has been discussed in the foregoing with reference to an exemplary embodiment of the hot coffee brewing apparatus of the invention, the invention is not restricted to this particular embodiment. discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A hot coffee brewing apparatus (1) with a casing (2), said apparatus (1) comprising a coffee extractor (3) equipped to receive ground coffee beans, a heater (4), and a container (5) for water used in the extraction of coffee and for receiving the extracted coffee, a circulation path (6) having an input (7) connecting to the container (5) and having an output (8) to the coffee extractor (3), and from which coffee extractor (3) the extracted coffee leaving the coffee extractor (3) will enter into the container (5), **characterized in that** the container (5) is immovably placed in the casing (2) with the input (7) of the circulation path (6) being fixed to the container (5), said container comprising a conduit (15) equipped with an inlet valve (13) and one-way valve (14) with which fresh water can be supplied to the container (5), and said container (5) comprising a tap (12) for dispensing freshly brewed coffee from the container (5).

2. The hot coffee brewing apparatus of claim 1,
**characterized in that** the container (5) comprises a divider plate (9) to improve the distribution of fluid coming out of the output (8) of the circulation path (6) to the coffee extractor (3).

3. The hot coffee brewing apparatus of claim 1 or 2,
**characterized in that** the heater (4) is in direct heat conducting contact with the container (5).

4. The hot coffee brewing apparatus of any one of claims 1 - 3, **characterized in that** the heater (4) is provided in or against one of the walls (5') of the container (5).

5. The hot coffee brewing apparatus of any one of claims 1 - 4, **characterized in that** the heater (4) is provided in or against a bottom wall (5') of the container (5).

6. The hot coffee brewing apparatus of any one of claims 1 - 5, **characterized in that** the heater (4) is arranged to heat fluid in the container (5) to a preset brewing temperature.

7. The hot coffee brewing apparatus of claim 6,
**characterized in that** the preset brewing temperature is set below boiling temperature of the fluid in the container (5).

8. The hot coffee brewing apparatus of any one of claims 1 - 7, **characterized in that** the container (5) is provided with a temperature sensor (10) to monitor the temperature of the fluid in the container (5) for controlling the heater (4).

9. The hot coffee brewing apparatus of any one of claims 1 - 8, **characterized in that** the circulation path (6) comprises a switchable pump (11).

10. The hot coffee brewing apparatus of claims 8 and 9,
**characterized in that** the switchable pump (11) is arranged to be activatable manually or automatically after reaching or surpassing a preset temperature of the fluid in the container (5) as determined with the temperature sensor (10).

11. The hot coffee brewing apparatus of claim 9 or 10,
**characterized in that** an operational time of the switchable pump (11) following activation is selectable to a predetermined brewing time period.

12. The hot coffee brewing apparatus of claim 11,
**characterized in that** the heater (4) is arranged to switch to warm keeping mode after elapse of the operational time of the switchable pump (11).

13. The hot coffee brewing apparatus of any one of claims 1 - 12, **characterized in that** the heater (4) is incapable to heat fluid in the container (5) to boiling temperature.

14. The hot coffee brewing apparatus of any one of claims 1 - 13, **characterized in that** the container (5) is provided with a second temperature sensor (16) in the heater's vicinity to monitor the temperature of the heater (4) and enable that said temperature is kept below boiling temperature.

## Patentansprüche

1. Vorrichtung (1) zum Brühen von heißem Kaffee mit einem Gehäuse (2), die genannte Vorrichtung (1) umfassend: ein Kaffeeextraktionsgerät (3), welches zur Aufnahme von gemahlenen Kaffeebohnen ausgestattet ist, eine Heizvorrichtung (4) und einen Behälter (5) für das bei der Kaffeeextraktion verwendete Wasser und zur Aufnahme des extrahierten Kaffees, einen umlaufenden Weg (6) mit einem Einlass (7), welcher mit dem Behälter (5) verbunden ist und einen Auslass (8) zum Kaffeeextraktionsgerät (3) aufweist, und von welchem Kaffeeextraktionsgerät (3) der extrahierte Kaffee, welcher das Kaffeeextraktionsgerät (3) verlässt, in den Behälter (5) eintritt, **dadurch gekennzeichnet, dass** der Behälter (5) unbewegbar in dem Gehäuse (2) angeordnet ist, wobei der Einlass (7) des umlaufenden Weges (6) an dem Behälter (5) befestigt ist, wobei der genannte Behälter eine Leitung (15) umfasst, die mit einem Einlassventil (13) und einem Einwegventil (14) ausgestattet ist, mit denen dem Behälter (5) Frischwasser zugeführt werden kann, und wobei der genannte Behälter (5) einen Hahn (12) zur Ausgabe von frisch gebrühtem Kaffee aus dem Behälter (5) umfasst.

2. Vorrichtung zum Brühen von heißem Kaffee nach Anspruch 1, **dadurch gekennzeichnet, dass** der Behälter (5) eine Trennplatte (9) umfasst, um die Verteilung der aus dem Auslass (8) des umlaufenden Weges (6) zum Kaffeeextraktionsgerät (3) austretenden Flüssigkeit zu verbessern.

3. Vorrichtung zum Brühen von heißem Kaffee nach Anspruch 1 oder 2, **dadurch gekennzeichnet, dass** die Heizvorrichtung (4) in direktem Wärmeleitkontakt mit dem Behälter (5) steht.

4. Vorrichtung zum Brühen von heißem Kaffee nach einem der Ansprüche 1 bis 3, **dadurch gekennzeichnet, dass** die Heizvorrichtung (4) in oder an einer der Wände (5') des Behälters (5) vorgesehen ist.

5. Vorrichtung zum Brühen von heißem Kaffee nach einem der Ansprüche 1 bis 4, **dadurch gekennzeichnet, dass** die Heizvorrichtung (4) in oder an einer Bodenwand (5') des Behälters (5) vorgesehen ist.

6. Vorrichtung zum Brühen von heißem Kaffee nach einem der Ansprüche 1 bis 5, **dadurch gekennzeichnet, dass** die Heizvorrichtung (4) angeordnet ist, um Flüssigkeit im Behälter (5) auf eine voreingestellte Brühtemperatur zu erhitzen.

7. Vorrichtung zum Brühen von heißem Kaffee nach Anspruch 6, **dadurch gekennzeichnet, dass** die voreingestellte Brühtemperatur unter der Siedetemperatur der Flüssigkeit in dem Behälter (5) liegt.

8. Vorrichtung zum Brühen von heißem Kaffee nach einem der Ansprüche 1 bis 7, **dadurch gekennzeichnet, dass** der Behälter (5) mit einem Temperatursensor (10) zur Überwachung der Temperatur der Flüssigkeit im Behälter (5) zur Steuerung der Heizvorrichtung (4) vorgesehen ist.

9. Vorrichtung zum Brühen von heißem Kaffee nach einem der Ansprüche 1 bis 8, **dadurch gekennzeichnet, dass** der umlaufende Weg (6) eine schaltbare Pumpe (11) umfasst.

10. Vorrichtung zum Brühen von heißem Kaffee nach einem der Ansprüche 8 und 9, **dadurch gekennzeichnet, dass** die schaltbare Pumpe (11) angeordnet ist, um manuell oder automatisch nach Erreichen oder Überschreiten einer voreingestellten Temperatur der Flüssigkeit in dem Behälter (5), wie sie mit dem Temperatursensor (10) bestimmt wird, aktiviert werden zu können.

11. Vorrichtung zum Brühen von heißem Kaffee nach Anspruch 9 oder 10, **dadurch gekennzeichnet, dass** eine Betriebszeit der schaltbaren Pumpe (11) nach dem Aktivieren auf eine vorbestimmte Brühzeitdauer wählbar ist.

12. Vorrichtung zum Brühen von heißem Kaffee nach Anspruch 11, **dadurch gekennzeichnet, dass** die Heizvorrichtung (4) angeordnet ist, um nach Ablauf der Betriebszeit der schaltbaren Pumpe (11) in den Warmhaltebetrieb zu schalten.

13. Vorrichtung zum Brühen von heißem Kaffee nach einem der Ansprüche 1 bis 12, **dadurch gekennzeichnet, dass** die Heizvorrichtung (4) nicht in der Lage ist, Flüssigkeit im Behälter (5) auf Siedetemperatur zu erhitzen.

14. Vorrichtung zum Brühen von heißem Kaffee nach einem der Ansprüche 1 bis 13, **dadurch gekennzeichnet, dass** der Behälter (5) mit einem zweiten Temperatursensor (16) in der Nähe der Heizvorrichtung versehen ist, um die Temperatur der Heizvorrichtung (4) zu überwachen und zu veranlassen, dass diese Temperatur unter der Siedetemperatur gehalten wird.

## Revendications

1. Appareil d'infusion de café chaud (1) avec un boîtier (2), ledit appareil (1) comportant un extracteur de café (3) équipé pour recevoir des grains de café moulu, un réchauffeur (4), et un récipient (5) pour l'eau utilisée dans l'extraction du café et pour recevoir le café extrait, un chemin de circulation (6) présentant une entrée (7) se raccordant au récipient (5) et présentant une sortie (8) vers l'extracteur de café (3), et à partir duquel extracteur de café (3) le café extrait sortant de l'extracteur de café (3) entrera dans le récipient (5), **caractérisé en ce que** le récipient (5) est placé de manière fixe dans le boîtier (2) avec l'entrée (7) du chemin de circulation (6) étant fixée au récipient (5), ledit récipient comportant un conduit (15) équipé d'une vanne d'entrée (13) et d'une vanne unidirectionnelle (14) permettant d'alimenter le récipient (5) en eau douce, et ledit récipient (5) comportant un robinet (12) de distribution de café fraîchement infusé à partir du récipient (5).

2. Appareil d'infusion de café chaud selon la revendication 1, **caractérisé en ce que** le récipient (5) comporte une plaque séparatrice (9) pour améliorer la distribution de fluide sortant de la sortie (8) du chemin de circulation (6) vers l'extracteur de café (3).

3. Appareil d'infusion de café chaud selon la revendication 1 ou 2, **caractérisé en ce que** le réchauffeur (4) est en contact direct de conduction de chaleur avec le récipient (5).

4. Appareil d'infusion de café chaud selon l'une quelconque des revendications 1 à 3, **caractérisé en ce que** le réchauffeur (4) est prévu dans ou contre l'une des parois (5') du récipient (5).

5. Appareil d'infusion de café chaud selon l'une quelconque des revendications 1 à 4, **caractérisé en ce que** le réchauffeur (4) est prévu dans ou contre une paroi inférieure (5') du récipient (5).

6. Appareil d'infusion de café chaud selon l'une quelconque des revendications 1 à 5, **caractérisé en ce que** le réchauffeur (4) est agencé pour chauffer un fluide dans le récipient (5) à une température d'infusion prédéfinie.

7. Appareil d'infusion de café chaud selon la revendication 6, **caractérisé en ce que** la température d'infusion prédéfinie est définie en dessous de la température d'ébullition du fluide dans le récipient (5).

8. Appareil d'infusion de café chaud selon l'une quelconque des revendications 1 à 7, **caractérisé en ce que** le récipient (5) est pourvu d'un capteur de température (10) pour surveiller la température du fluide dans le récipient (5) pour commander le réchauffeur (4).

9. Appareil d'infusion de café chaud selon l'une quelconque des revendications 1 à 8, **caractérisé en ce que** le chemin de circulation (6) comporte une pompe commutable (11).

10. Appareil d'infusion de café chaud selon les revendications 8 et 9, **caractérisé en ce que** la pompe commutable (11) est agencée pour pouvoir être activée manuellement ou automatiquement après avoir atteint ou dépassé une température prédéfinie du fluide dans le récipient (5) telle que déterminée avec le capteur de température (10).

11. Appareil d'infusion de café chaud selon la revendication 9 ou 10, **caractérisé en ce qu'**un temps de fonctionnement de la pompe commutable (11) après activation peut être sélectionné à une période de temps d'infusion prédéterminée.

12. Appareil d'infusion de café chaud selon la revendication 11, **caractérisé en ce que** le réchauffeur (4) est agencé pour passer en mode de maintien au chaud après écoulement du temps de fonctionnement de la pompe commutable (11).

13. Appareil d'infusion de café chaud selon l'une quelconque des revendications 1 à 12, **caractérisé en ce que** le réchauffeur (4) est incapable de chauffer un fluide dans le récipient (5) à la température d'ébullition.

14. Appareil d'infusion de café chaud selon l'une quelconque des revendications 1 à 13, **caractérisé en ce que** le récipient (5) est pourvu d'un second capteur de température (16) à proximité du réchauffeur pour surveiller la température du réchauffeur (4) et permettre le maintien de ladite température en dessous de la température d'ébullition.
